(19) Europäisches Patentamt / European Patent Office / Office européen des brevets

(11) **EP 4 624 992 A1**

(12) **EUROPEAN PATENT APPLICATION**
published in accordance with Art. 153(4) EPC

(43) Date of publication:
   **01.10.2025 Bulletin 2025/40**

(21) Application number: **22970279.0**

(22) Date of filing: **30.12.2022**

(51) International Patent Classification (IPC):
   **G01S 13/86** (2006.01)   **G01S 13/91** (2006.01)
   **G06T 7/70** (2017.01)

(52) Cooperative Patent Classification (CPC):
   **G01S 13/86; G01S 13/91; G06T 3/00; G06T 5/00;**
   **G06T 7/70; G06V 10/766; G06V 10/98;**
   **G06V 20/10; G08G 1/04; G08G 1/042**

(86) International application number:
   **PCT/KR2022/021714**

(87) International publication number:
   **WO 2024/143642 (04.07.2024 Gazette 2024/27)**

(84) Designated Contracting States:
   **AL AT BE BG CH CY CZ DE DK EE ES FI FR GB**
   **GR HR HU IE IS IT LI LT LU LV MC ME MK MT NL**
   **NO PL PT RO RS SE SI SK SM TR**
   Designated Extension States:
   **BA**
   Designated Validation States:
   **KH MA MD TN**

(30) Priority: **29.12.2022 KR 20220189132**

(71) Applicant: **BITSENSING INC.**
   **Seoul 04778 (KR)**

(72) Inventors:
   • **PARK, Kyu Tae**
     **Seoul 06783 (KR)**
   • **CHAE, Young Hwan**
     **Seongnam-si Gyeonggi-do 13105 (KR)**

(74) Representative: **BCKIP Part mbB**
   **MK1**
   **Landsbergerstraße 98, 3.Stock**
   **80339 München (DE)**

(54) **APPARATUS, METHOD AND COMPUTER PROGRAM FOR DETECTING OBJECT BY USING RADAR SENSOR AND IMAGE SENSOR**

(57)    An apparatus for detecting an object using a radar sensor and an image sensor includes an object sensing unit configured to: sense a first object through the radar sensor installed to sense a target road and sense a second object through the image sensor installed to sense the target road; an object matching unit configured to match the first object with the second object; a lookup table management unit configured to generate a lookup table for the target road based on the first object and the second object which are matched with each other; and a complementation unit configured to complement a sensing result from the radar sensor or a sensing result from the image sensor based on the generated lookup table.

*FIG. 1*

## Description

## TECHNICAL FIELD

The present disclosure relates to an apparatus, method and computer program for detecting an object using a radar sensor and an image sensor.

## BACKGROUND

A traffic control system refers to a system that intensively manages traffic flow, such as an increase or decrease in traffic volume, and automatically controls the signal timing of traffic lights to maintain optimal traffic conditions.

In such traffic control systems, radar sensors which are excellent for detecting vehicle speed, distance, and angle are mainly used. In relation to techniques for controlling roads and traffic using radar sensors, Korean Patent No. 10-0987177 discloses a road monitoring method using a radar and an apparatus thereof.

However, when roads and traffic are controlled using radar sensors, it is difficult to accurately extract signals from stationary vehicles due to ground reflection or the like. As a result, there are limitations in analyzing vehicle shapes, which restricts the performance of object classification.

To address this issue, methods have been proposed that use image sensors in addition to radar sensors for road and traffic control. However, these methods have some drawbacks, such as reduced accuracy caused by camera distortion, road surface curvature, or the like.

## DISCLOSURE OF THE INVENTION

## PROBLEMS TO BE SOLVED BY THE INVENTION

The present disclosure is conceived to provide an object detection apparatus, method and computer program for sensing a first object through a radar sensor installed to sense a target road, sensing a second object through an image sensor installed to sense the target road, and matching the first object with the second object.

Also, the present disclosure is conceived to provide an object detection apparatus, method and computer program for generating a lookup table for a target road based on a first object and a second object which are matched with each other and complementing a sensing result from a radar sensor or a sensing result from an image sensor based on the generated lookup table.

However, the problems to be solved by the present disclosure are not limited to the above-described problems. There may be other problems to be solved by the present disclosure.

## MEANS FOR SOLVING THE PROBLEMS

As a technical means for solving the above-described technical problem, An apparatus for detecting an object using a radar sensor and an image sensor may include an object sensing unit configured to: sense a first object through the radar sensor installed to sense a target road and sense a second object through the image sensor installed to sense the target road; an object matching unit configured to match the first object with the second object; a lookup table management unit configured to generate a lookup table for the target road based on the first object and the second object which are matched with each other; and a complementation unit configured to complement a sensing result from the radar sensor or a sensing result from the image sensor based on the generated lookup table.

According to another exemplary embodiment, a method for detecting an object using a radar sensor and an image sensor by an object detection apparatus may include sensing a first object through the radar sensor installed to sense a target road and sense a second object through the image sensor installed to sense the target road; matching the first object with the second object; generating a lookup table for the target road based on the first object and the second object which are matched with each other; and complementing a sensing result from the radar sensor or a sensing result from the image sensor based on the generated lookup table.

According to another exemplary embodiment, a computer program stored in a computer-readable medium and including a sequence of instructions for detecting an object using a radar sensor and an image sensor, wherein when the computer program is executed, the instructions cause a computing device to: sense a first object through the radar sensor installed to sense a target road and sense a second object through the image sensor installed to sense the target road; match the first object with the second object; generate a lookup table for the target road based on the first object and the second object which are matched with each other; and complement a sensing result from the radar sensor or a sensing result from the image sensor based on the generated lookup table.

The above-described technical solutions are provided by way of illustration only and should not be construed as liming the present disclosure. Besides the above-described embodiments, there may be additional embodiments described in the accompanying drawings and the detailed description.

## EFFECTS OF THE INVENTION

According to any one of the above-described means for solving the problems of the present disclosure, it is possible to provide an object detection apparatus, method and computer program using a radar sensor, which is excellent for determining speed, distance, angle, etc., and an image sensor, which is excellent for object classification and object size determination, at the same time to recognize the same object by sensing a first object through the radar sensor installed to sense a target road, sensing a second object through the image sensor installed to sense the target road, and matching the first object with the second object.

Also, it is possible to provide an object detection apparatus, method and computer program using a radar sensor and an image sensor at the same time to improve reduced accuracy caused by camera distortion, road surface curvature, or the like by generating a lookup table for a target road based on a first object and a second object and complementing a sensing result from the radar sensor or a sensing result from the image sensor based on the generated lookup table.

Further, it is possible to provide an object detection apparatus, method and computer program for deriving an object recognition result with high reliability by matching a first object with a second object based on a lane of a target road and then generating a lookup table for the target road.

Furthermore, it is possible to provide an object detection apparatus, method and computer program for generating a lookup table with high reliability by eliminating noise caused by mismatching through linear regression and homography and generating a lookup table not only for the interior of a lane but also for the left, right, upper, and lower areas outside the lane.

For example, it is possible to provide an object detection apparatus, method and computer program for displaying a first object such as a slowly approaching vehicle, a stationary vehicle, or a pedestrian, which is difficult to sense with a radar sensor, on a radar map based on a second object matched with the first object through a lookup table.

Moreover, it is possible to provide an object detection apparatus, method and computer program using a radar sensor and an image sensor at the same time to solve the problem where a large vehicle (a first object) is mistakenly sensed as a plurality of small vehicles (a plurality of first objects).

**BRIEF DESCRIPTION OF THE DRAWINGS**

FIG. 1 shows the configuration of an object detection apparatus according to an embodiment of the present disclosure.
FIG. 2 shows an example of setting a lane for a radar sensor and a lane for an image sensor on a target road according to an embodiment of the present disclosure.
FIG. 3 shows an example of matching a first object with a second object according to an embodiment of the present disclosure.

FIG. 4 shows an example of generating a representative lookup table for the target road based on the first object and the second object according to an embodiment of the present disclosure.
FIG. 5 shows an example of expanding the representative lookup table through linear regression according to an embodiment of the present disclosure.
FIG. 6 shows an example of expanding the representative lookup table through homography according to an embodiment of the present disclosure.
FIG. 7 shows an example of complementing a sensing result from the radar sensor or a sensing result from the image sensor according to an embodiment of the present disclosure.
FIG. 8 is a flowchart showing a method for detecting an object using the radar sensor and the image sensor in the object detection apparatus according to an embodiment of the present disclosure.

**BEST MODE FOR CARRYING OUT THE INVENTION**

Hereinafter, embodiments of the present disclosure will be described in detail with reference to the accompanying drawings to be readily implemented by a person with ordinary skill in the art to which the present invention belongs. However, it is to be noted that the present disclosure is not limited to the example embodiments but can be embodied in various other ways. In the drawings, parts irrelevant to the description are omitted in order to clearly explain the present disclosure, and like reference numerals denote like parts through the whole document.

Through the whole document, the term "connected to" or "coupled to" that is used to designate a connection or coupling of one element to another element includes both a case that an element is "directly connected or coupled to" another element and a case that an element is "electronically connected or coupled to" another element via still another element. Further, it is to be understood that the term "comprises or includes" and/or "comprising or including" used in the document means that one or more other components, steps, operation and/or existence or addition of elements are not excluded in addition to the described components, steps, operation and/or elements unless context dictates otherwise and is not intended to preclude the possibility that one or more other features, numbers, steps, operations, components, parts, or combinations thereof may exist or may be added.

Throughout the whole document, the term "unit" includes a unit implemented by hardware or software and a unit implemented by both of them. One unit may be implemented by two or more pieces of hardware, and two or more units may be implemented by one piece of hardedware.

In the present specification, some of operations or functions described as being performed by a device may be performed by a server connected to the device.

Likewise, some of operations or functions described as being performed by a server may be performed by a device connected to the server.

Hereinafter, the present disclosure will be explained in detail with reference to the accompanying configuration views or process flowcharts.

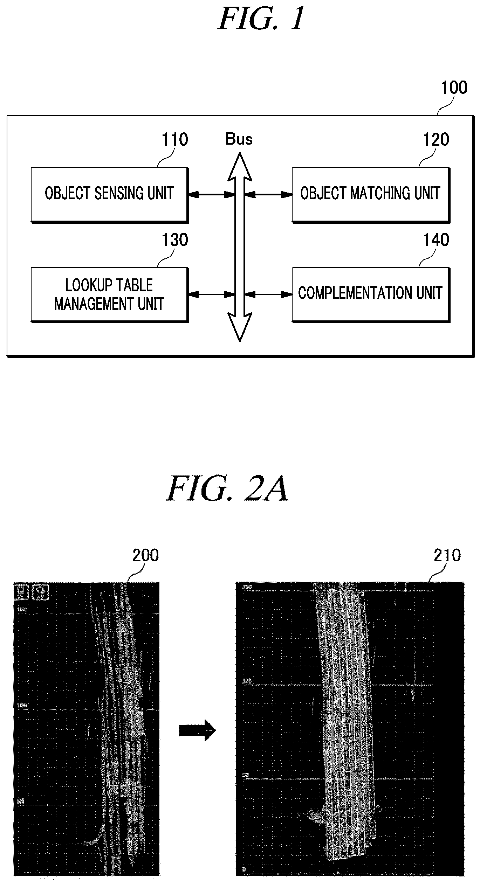

**FIG.** 1 shows the configuration of an object detection apparatus according to an embodiment of the present disclosure. Referring to FIG. 1, an object detection apparatus 100 may include an object sensing unit 110, an object matching unit 120, a lookup table management unit 130, a complementation unit 140, and a setting unit (not shown).

The object sensing unit 110 may sense a first object through a radar sensor installed to sense a target road. For example, the object sensing unit 110 may sense the first object based on measurement data related to the object when the measurement data is acquired by the radar sensor. Herein, the radar sensor may be a frequency-modulated continuous wave (FMCW) radar, but is not limited thereto.

The object sensing unit 110 may sense a second object through an image sensor installed to sense the target road. For example, the object sensing unit 110 may sense the second object by using various techniques such as feature extraction, AI-based learning, etc. when an image of the target road is captured by the radar sensor. Herein, the image sensor may be a camera or a lidar, but is not limited thereto.

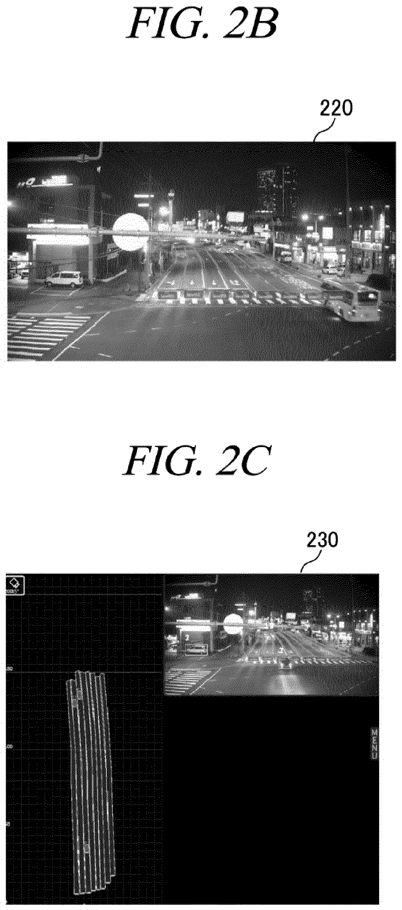

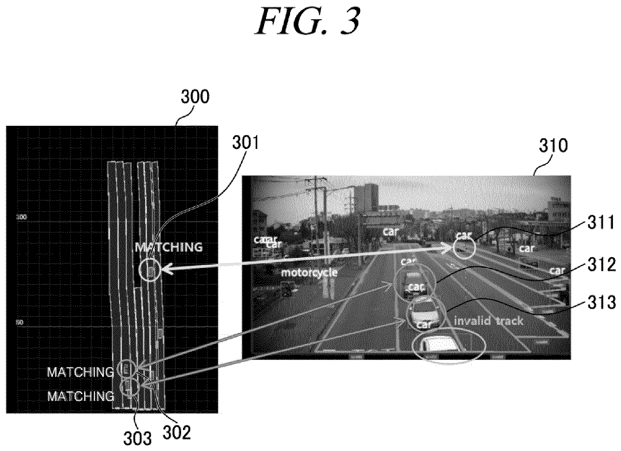

The setting unit (not shown) may set a lane for a radar sensor and a lane for an image sensor in the target road. When the radar sensor and the image sensor are used in combination, it is possible to define the usage range thereof by setting the lane for the radar sensor and the lane for the image sensor in the target road. The process of setting the lane for the radar sensor and the lane for the image sensor will be described in detail with reference to **FIG. 2** and **FIG. 3.**

**FIG. 2** shows an example of setting the lane for the radar sensor and the lane for the image sensor in the target road according to an embodiment of the present disclosure.

Referring to **FIG. 2A,** the setting unit (not shown) may set a radar sensor lane 210 for the target road by using the radar sensor. For example, the setting unit (not shown) may accumulate central trajectories 200 of objects passing through the target road by using the radar sensor and set the radar sensor lane 210 for the target road based on the accumulated central trajectories 200 of objects.

In the case of the radar sensor, object coordinates are set relative to the radar sensor. Thus, it is difficult to set a lane without data on trajectories of objects.

Therefore, according to the present disclosure, the traffic flow tendency within a lane in the target road can be identified by accumulating the central trajectories 200 of objects passing through the target road. Thus, it is possible to set the radar sensor lane 210 for the target road.

Referring to **FIG. 2B,** the setting unit (not shown) may set an image sensor lane 220 for the target road by using the image sensor. For example, the setting unit (not shown) may set the image sensor lane 220 for the target road based on the actual lane visible in an image captured by the image sensor.

**FIG. 2C** illustrates a sensor fusion area 230 including both the radar sensor lane and the image sensor lane set for the target road. The sensor fusion area 230 may be used to complement a sensing result from the radar sensor or a sensing result from the image sensor. Herein, the number of radar sensor lanes set and the number of image sensor lanes set for the target road may be identical.

Referring back to **FIG. 1,** the object matching unit 120 may match the first object with the second object.

The object matching unit 120 may match the first object with the second object by comparing position information of the first object located within the radar sensor lane set in the target road with position information of the second object located within the image sensor lane set in the target road.

For example, the object matching unit 120 may determine whether the first object and the second object are the same object by comparing the position information of the first object located within the radar sensor lane with the position information of the second object located within the image sensor lane. In this case, if the first object and the second object are determined to be the same object, the object matching unit 120 may match the first object sensed by the radar sensor with the second object sensed by the image sensor. The process of matching the first object with the second object will be described in detail with reference to **FIG. 3.**

**FIG. 3** shows an example of matching a first object with a second object according to an embodiment of the present disclosure. In FIG. 3, it is assumed that a plurality of first objects 301 to 303 is located within a radar sensor lane 300 for the target road, and a plurality of second objects 311 to 313 is located within an image sensor lane 310 for the target road.

The object matching unit 120 may compare positions of the plurality of first objects 301 to 303 and positions of the plurality of second objects 311 to 313, match a 1-1 object 301 with a 2-1 object 311, and match a 1-2 object 302, which is located in front of the 1-1 object 301, with a 2-2 object 312, which is located in front of the 2-1 object 311, in the same lane.

Also, the object matching unit 120 may compare the positions of the plurality of first objects 301 to 303 with the positions of the plurality of second objects 311 to 313 to match a 1-3 object 303 with a 2-3 object 313, which are located in different lanes.

Referring back to FIG. 1, the object matching unit 120 may match the first object with the second object based on whether the first and second objects satisfy predetermined matching conditions.

The predetermined matching conditions may include, for example: 1) a case where the first object located within the radar sensor lane and the second object located within the image sensor lane for the target road are in the same lane; 2) a case where a position of the first object falls within a first threshold ratio of a total length of the radar sensor lane or a position of the second object falls within a first threshold ratio of a total length of the image sensor lane; 3) a case where a plurality of objects is present in a single actual lane of the target road, and the number of first objects located within the radar sensor lane and the number of second objects located within the image sensor lane are the same; 4) and a case where a plurality of objects is present in a single actual lane of the target road, and a distance ratio between the 1-1 object and the 1-2 object among first objects is within a second threshold or a distance ratio between the 2-1 object and the 2-2 object among second objects is within a second threshold.

The lookup table management unit 130 may primarily generate a lookup table (a lookup table in which detailed data is not yet stored) including a plurality of pixels of the same size as a plurality of pixels corresponding to image data.

The lookup table management unit 130 may generate a lookup table for the target road based on the matched first and second objects. In this case, the lookup table management unit 130 may secondarily generate a lookup table for the target road based on coordinate information of the first object acquired by the radar sensor and coordinate information of the second object acquired by the image sensor.

The lookup table management unit 130 may primarily generate a lookup table (a lookup table in which detailed data is not yet stored) including a plurality of pixels of the same size as a plurality of pixels corresponding to image data, and may generate a second lookup table with detailed data stored, based on pixel coordinate information corresponding to a position of the second object among the plurality of pixels corresponding to the image data generated by the image sensor and radar coordinate information corresponding to a position of the first object.

For example, it is assumed that the radar coordinate information corresponding to the position of the first object is "horizontal axis: -3.2 m, vertical axis: 18.2 m", and the pixel coordinate information corresponding to the position of the second object is "horizontal axis: 431 px, vertical axis: 840 px". The lookup table management unit 130 may primarily generate a lookup table corresponding to the image data generated by the image sensor and may store "-3.2, 18.2" in the generated lookup table based on a pixel [431, 840] to secondarily generate a lookup table.

The lookup table management unit 130 may generate a horizontal lookup table based on the radar coordinate information for the horizontal axis corresponding to the position of the first object, and a vertical lookup table based on the radar coordinate information for the vertical axis corresponding to the position of the first object. For example, if the radar coordinate information corresponding to the position of the first object is "horizontal axis: -3.2 m, vertical axis: 18.2 m" and the pixel coordinate information corresponding to the position of the second object is "horizontal axis: 431 px, vertical axis: 840 px", the lookup table management unit 130 may store "-3.2" and "18.2" at the pixel [431, 840] in each of the horizontal lookup table and the vertical lookup table to secondarily generate a lookup table.

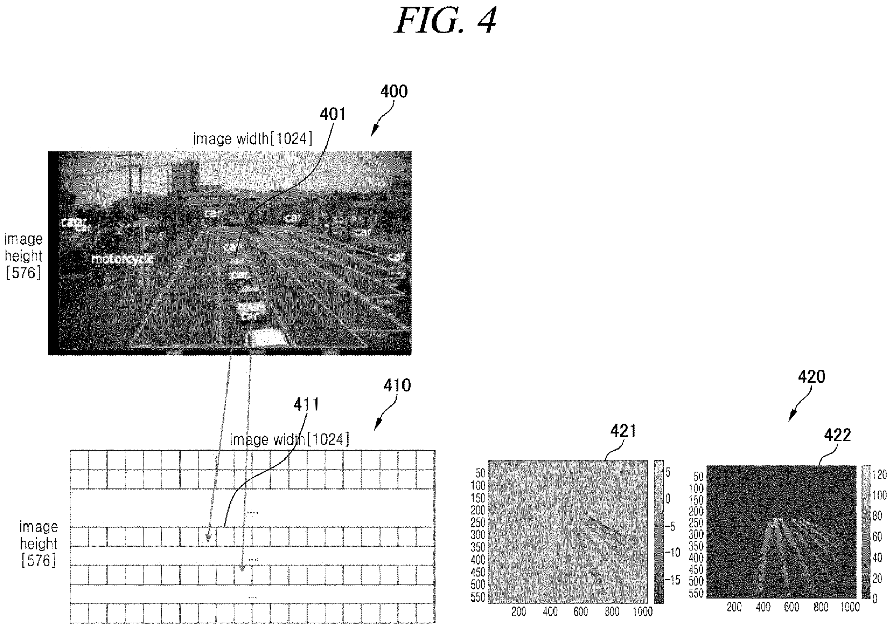

When a plurality of pieces of image data corresponding to a plurality of frames is generated by the image sensor for a predetermined period, the lookup table management unit 130 may generate a plurality of lookup tables corresponding to the plurality of pieces of image data, respectively, and apply a smoothing filter to the plurality of lookup tables to generate a representative lookup table. The process of generating the representative lookup table will be described in detail with reference to **FIG. 4.**

**FIG. 4** shows an example of generating a representative lookup table for the target road based on the first object and the second object according to an embodiment of the present disclosure. Referring to **FIG. 4,** the lookup table management unit 130 may primarily generate a lookup table (a lookup table in which detailed data is not yet stored) including a plurality of pixels of the same size as a plurality of pixels corresponding to image data 400 generated by the image sensor, and may secondarily generate a lookup table with detailed data stored by storing radar coordinate information corresponding to a position of the first object in pixel coordinate information 411 of the lookup table corresponding to pixel coordinate information corresponding to a position of a second object 401 among a plurality of pixels corresponding to the image data 400. Herein, the size of the plurality of pixels corresponding to the image data 400 may be 1024×576 px, and the position of the second object may correspond to a midpoint of a bottom edge of a bounding box, which represents the ground, surrounding the second object 401 within the image data.

The lookup table management unit 130 may generate a horizontal lookup table and a vertical lookup table based on the radar coordinate information corresponding to the position of the first object. Then, the lookup table management unit 130 may match the first object with the second object for each frame until the representative lookup table is generated, and may update the secondarily generated lookup table based on a result of matching the first and second objects.

Hereinafter, the process of generating a horizontal lookup table 410 based on the radar coordinate information for the horizontal axis corresponding to the position of the first object will be described. Since the vertical lookup table is generated through the same process as the horizontal lookup table, detailed explanation of the vertical lookup table will be omitted.

When the second object 401 is matched with the first object, the lookup table management unit 130 may generate the horizontal lookup table 410 by storing the radar coordinate information for the horizontal axis corresponding to the position of the first object in the pixel coordinate information 411 of the lookup table 410 corresponding to the pixel coordinate information corresponding to the position of the second object 401. For example, if the radar coordinate information for the horizontal axis of the first object matched with the second object 401 is "-10 m", the lookup table management unit 130 may store "-10.0" in the pixel coordinate information 411 corresponding to the position of the second object 401 among the plurality of pixels set to 1024×576 px. In another example, if the radar coordinate information for the horizontal axis of the first object matched with the second object 401 is "-8 m", the lookup table management unit 130 may store "-8.0" in the pixel coordinate information corresponding to the position of the second object 401 among the plurality of pixels set to 1024×576 px.

Then, the lookup table management unit 130 may apply a smoothing filter, such as a first-order infinite impulse response (IIR) filter, to the plurality of lookup tables to generate the representative lookup table. For example, if no pre-stored value exists in coordinate information corresponding to a row or column of the lookup table, the lookup table management unit 130 may store initially matched radar coordinate information. If a pre-stored value exists in coordinate information corresponding to a row or column of the lookup table, the lookup table management unit 130 may calculate a representative value to which a proper ratio between the stored value and the radar coordinate information is applied. For example, the lookup table management unit 130 may generate a representative lookup table 420 by calculating a representative value of "alpha=1" when no pre-stored value exists and a representative value of "alpha=0.1" when a pre-stored value exists according to LUT_lateral=alpha*(radar_lateral)+(1-alpha)*(LUT_lateral). In this case, the lookup table management unit 130 may generate a representative horizontal lookup table 421 based on the horizontal lookup table and a representative vertical lookup table 422 based on the vertical lookup table.

The lookup table management unit 130 may generate the representative lookup table 421 when the degree of representative value calculation for each lane of the target road exceeds a predetermined ratio. Herein, the degree of representative value calculation may be determined based on the ratio between the number of reference pixels and the number of matched pixels, and a fixed reference area, such as a generated lane, may be used for calculation.

Since waiting for the completion of representative value calculations for all lanes of the target road is inefficient, the lookup table management unit 130 may terminate the process of calculating a representative value once representative values have accumulated for a predetermined number of lanes. For example, if the total number of lanes in the target road is N and the number of lanes used reaches or exceeds a ratio r (0 < r ≤ 1) of N, the process of calculating a representative value may be terminated. In case of N*r<num_trained_lane, the collection of measurement data and image data may be terminated.

Referring back to FIG. 1, the lookup table management unit 130 may expand the representative lookup table through either linear regression or homography. This is to allow the representative lookup table to be expanded to estimate an area where pixel coordinate information and radar coordinate information have not been mapped once sufficient data has been accumulated in the representative lookup table. Also, the representative lookup table may contain outliers depending on environmental conditions, which can lead to critical errors in matching results in the representative lookup table. Since the degree of representative value calculation may vary across lanes, the random sampling consensus (RANSAC) may be applied per lane to suppress distribution over certain lanes. Therefore, it is possible to improve sensing accuracy by using data subsets likely free of outliers.

The lookup table management unit 130 may generate a linear regression model based on one of a plurality of rows of data in the representative lookup table through linear regression. Herein, vertical pixel units vary exponentially with increasing object distance in the camera view, while horizontal pixel units change linearly. Therefore, horizontal data can be used to generate the linear regression model.

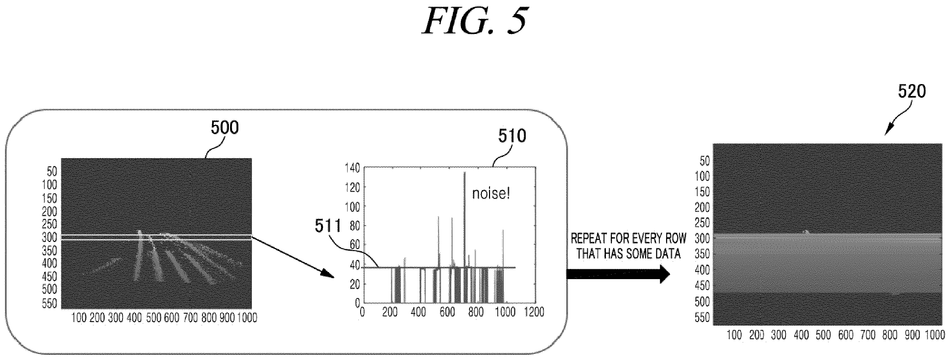

Subsequently, the lookup table management unit 130 may remove noise from the row data based on the linear regression model and infer radar coordinate information for pixel coordinates where radar coordinate information is not stored. The process of inferring radar coordinate information for pixel coordinates where radar coordinate information is not stored through linear regression will be described in detail with reference to **FIG. 5.**

**FIG. 5** shows an example of expanding the representative lookup table through linear regression according to an embodiment of the present disclosure. Referring to **FIG. 5,** the lookup table management unit 130 may begin with a first row of a representative vertical lookup table 500 and check whether sufficient data has been collected for each row of data 510. When sufficient data has been collected for each row of data 510, the lookup table management unit 130 may examine the data 510 in each row and derive a linear model 511 through linear regression

Thereafter, when a specific pattern appears in the collected data values or when a significant amount of noise is included, the lookup table management unit 130 may face a problem in the accuracy of the linear model 511 derived through linear regression. To improve the accuracy, the lookup table management unit 130 may use the RANSAC.

Then, based on the linear model 511, the lookup table management unit 130 may remove noise from each row of the representative vertical lookup table and infer radar coordinate information for pixel coordinates where radar coordinate information is not stored. Through this process, the lookup table management unit 130 may generate an expanded representative vertical lookup table 520 by expanding the representative vertical lookup table 500.

The lookup table management unit 130 may repeat this process from the second row to the last row of both the horizontal and vertical lookup tables. In this case, if at least one row lacks sufficient data, the lookup table management unit 130 may skip the generating of a model for the row to avoid the accuracy problem.

When the representative lookup table is expanded through linear regression, each expanded row 510 is independent, and, thus, discontinuities may occur between row models depending on the data accumulated in each row 510.

Therefore, the lookup table management unit 130 may calculate a weighted arithmetic mean for each pixel of the expanded representative lookup table through a filtering process between the expanded rows. The process of performing filtering between rows by calculating a weighted arithmetic mean is as follows.

For example, if a value exists at the pixel in the first row and first column of the expanded representative lookup table, the lookup table management unit 130 may assign a large weight to a current pixel value and smaller weights to neighboring pixel values (e.g., first row and second column, second row and first column, second row and second column) to preserve the current pixel value while calculating a weighted arithmetic mean that considers continuity between rows. In this case, pixels with no value may be excluded from the calculation of weighted arithmetic mean.

Then, the lookup table management unit 130 may apply this method to all pixels in the expanded representative horizontal and vertical lookup tables. Thus, it is possible to reduce numerical differences between rows and establish dependencies between them.

Referring back to **FIG. 1,** the lookup table management unit 130 may use homography to derive a coefficient matrix for the mapping relationship between radar coordinate information and pixel coordinate information. Based on the derived coefficient matrix, the lookup table management unit 130 may expand the representative lookup table. Herein, homography is used to describe the transformation relationship between two planes, and may be utilized to attempt mapping between radar coordinate information and image coordinate information. Since homography enables continuous two-dimensional mapping, unlike the above-described linear regression, there is no need for a filtering process to ensure continuity between rows. Also, each row does not require a large amount of data, which makes it advantageous for modeling with relatively little data.

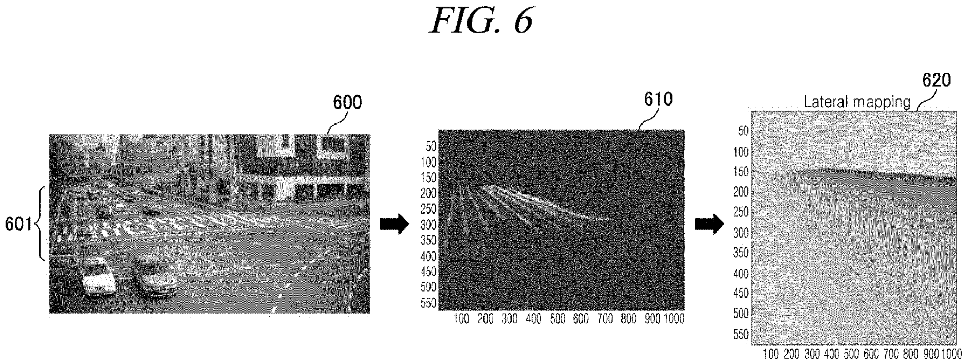

**FIG. 6** shows an example of expanding the representative lookup table through homography according to an embodiment of the present disclosure. Referring to **FIG. 6,** when using homography, the lookup table management unit 130 may construct two representative value equations: one for the representative horizontal lookup table (x) and one for the representative vertical lookup table (y). Herein, two rational function equations that map radar coordinate information (x', y') to original image pixels (x, y) are given by Equation 1 below.

[Equation 1]

$$x' = \frac{h_1 x + h_2 y + h_3}{h_7 x + h_8 y + h_9},$$

$$y' = \frac{h_4 x + h_5 y + h_6}{h_7 x + h_8 y + h_9},$$

*where* $h = [h_1\ h_2\ h_3\ h_4\ h_5\ h_6\ h_7\ h_8\ h_9]^T$

That is, in the case of the pixel in the second row and tenth column, y is 2 and x is 10, and, thus, the values of x' and y' calculated from the representative value equations may correspond to the values in the representative horizontal lookup table and the representative vertical lookup table, respectively.

Subsequently, the lookup table management unit 130 may derive a coefficient vector H containing nine coefficients in order to derive a transformation equation.

[Equation 2]

$$A = \begin{bmatrix} x_1 & y_1 & 1 & 0 & 0 & 0 & -x'_1 x_1 & -x'_1 y_1 & -x'_1 \\ 0 & 0 & 0 & x_1 & y_1 & 1 & -y'_1 x_1 & -y'_1 y_1 & -y'_1 \\ & \vdots & & & & & \vdots & & \\ x_n & y_n & 1 & 0 & 0 & 0 & -x'_n x_n & -x'_n y_n & -x'_n \\ 0 & 0 & 0 & x_n & y_n & 1 & -y'_n x_n & -y'_n y_n & -y'_n \end{bmatrix},$$

$$0 = [0, 0, 0, \dots, 0, 0, 0]^T.$$

Referring to Equation 2, an optimal coefficient vector may satisfy AH=0. Herein, a matrix A may be generated based on n number of pixel values randomly selected from the representative lookup table. Then, to derive a value of a coefficient matrix H that satisfies AH=0, the eigenvector associated with the smallest eigenvalue of $A^T A$ may be used as an approximation $\hat{H}$ of the matrix H.

As in the above-described linear regression method, a lookup table may be generated by mapping pixel coordinate information extracted from image data 600 to radar coordinate information and a homography model may be generated based on a representative lookup table 610 generated by calculating a representative value of the lookup table. Herein, as for homography, noise in the representative value may cause an error in the homography model, and, thus, the removal of noise is essential.

When noise is removed, lane-wise RANSAC may be used to derive subsets randomly selected from representative values, and a coefficient matrix H and a representative value equation that satisfy the subsets may be generated. For example, if five lanes are generated for the target road and mapping between pixel coordinate information and radar coordinate information is performed along with data collection, and representative values have been calculated for three of the lanes, the data density is likely to be higher in those three lanes. In this case, rather than generating a lookup table based on the three lanes, RANSAC may be configured to select n number of data even from the remaining two lanes with less data, in to ensure a more balanced lookup table.

By repeating this process to derive a plurality of subsets and generate many homography models, the likelihood of producing a better homography model can be increased. Herein, an optimal homography model may be one that has fewer pixels that exceed the threshold of model values corresponding to the original representative values.

Then, the lookup table management unit 130 may determine final H coefficient vectors of two coordinate expansion equations to expand (620) the lookup table for lateral mapping and longitudinal mapping. In this case, unlike linear regression, homography can derive continuous transformed coordinate values for all coordinates in an image. Since it uses a 2D model, there may be no need to calculate weighted means for continuity between rows after expansion.

As such, homography provides the advantage of being able to expand even the rows in the representative lookup table that contain no data at all.

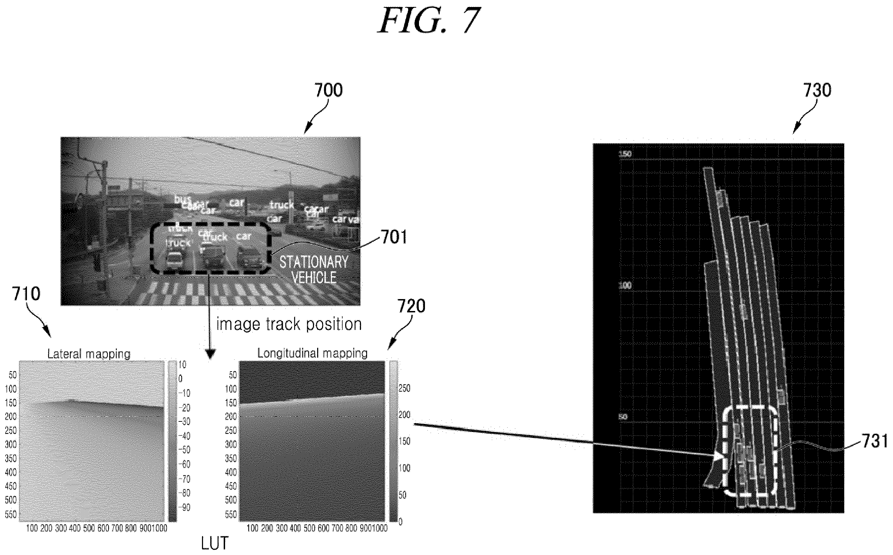

Referring back to **FIG. 1,** the complementation unit 140 may complement a sensing result from the radar sensor or a sensing result from the image sensor based on the generated lookup table. The process of updating the sensing results will be described in detail with reference to **FIG. 7.**

**FIG. 7** shows an example of complementing a sensing result from the radar sensor or a sensing result from the image sensor according to an embodiment of the present disclosure. Referring to **FIG. 7,** when the radar sensor momentarily fails to sense an object, the complementation unit 140 may update the status of a first object based on a second object from the image sensor mapped to the first object through the lookup table.

For example, in the case of the radar sensor, it may be difficult to accurately identify a stationary vehicle due to ground reflection or the like. However, after identifying the presence of a stationary vehicle 701 as the second object from image data 700 acquired by the image sensor, a first object 731 can be displayed at the coordinates corresponding to the stationary vehicle 710 on a radar map 730, using the representative lookup table including a representative horizontal lookup table 710 and a representative vertical lookup table 720.

Although not shown in **FIG. 7,** if a vehicle A is driving under favorable conditions for radar sensing, the radar sensor can sense a first object corresponding to the vehicle A. If abnormal data is collected for a predetermined period due to interference noise or the like, it is impossible to track the vehicle A. In this case, the radar map is updated by referencing the second object matched with the first object corresponding to the vehicle A through the lookup table, which facilitates the tracking of the vehicle A.

In another example, if it is difficult to generate a first object solely based on the radar sensor's measurement data for a slow-moving vehicle B during a right turn at the entrance, the second object, which is matched with the vehicle B, may be converted into radar coordinates based on the lookup table and then used to help satisfy the conditions for generating the first object.

In yet another example, when the first object is sensed by the radar sensor, its vehicle type, such as width and length, may be estimated with low accuracy. However, since the second object sensed by the image sensor exhibits distinct external features for vehicle type classification, it is possible to classify a vehicle type with higher accuracy through AI-based learning. Then, radar coordinate information corresponding to the second object whose vehicle type has been analyzed may be extracted using the lookup table, and the vehicle type of the first object approaching the radar coordinate information may be stored.

In still another example, for long vehicles such as trucks or buses, a radar signal may have high dispersion, which may cause the first object to be split into a plurality of first objects. However, by identifying the vehicle type of the second object based on the lookup table and estimating the length of the second object, the plurality of split first objects can be merged to suppress misdetection. For example, if a truck is mistakenly sensed as a plurality of first objects, such as two or more small vehicles, based solely on radar signals, the vehicle type of the first object can be identified as a truck based on a second object sensed by the image sensor based on the lookup table, pixel coordinate information can be converted into radar coordinate information, a first object range longer than that of a small vehicle can be determined for nearby first objects based on the vehicle type, and the small vehicles within that range can be merged.

In still another example, ghost objects may occur due to double bounce, wheel ghost, or reflections from terrain features. The authenticity of the first and second objects can be determined by comparing the first sensor sensed by the radar sensor with the second object sensed by the image sensor.

In still another example, the speed, distance, and angle collected from the first object sensed by the radar sensor may be stored in the second object sensed by the image sensor which is not capable of measuring speed. In environments where AI performance degrades, such as during adverse weather conditions, the reliability of AI-based learning can be enhanced by referencing the first object sensed by the radar sensor based on the lookup table.

In still another example, vulnerable road users (VRUs) can be protected. For example, tracking VRUs is difficult using only the radar sensor, but the VRUs can be sensed by extracting features from image data acquired by the image sensor.

For example, pedestrian tracks located inside or outside the lane can be used to derive horizontal and vertical values on the radar map based on the representative lookup table, a relative distance can be calculated based on coordinates of the first object sensed by the radar sensor and coordinates of a VRU as the second object, the estimated time to collision can be calculated using the head angle, speed, and the like between the first object sensed by the radar sensor and the VRU as the second object based on the relative distance, and if the estimated time to collision is below a specified threshold, a collision warning alert can be generated.

Data related to collision warnings can be collected by a system, such as a road control system, connected to a fusion sensor. For example, the road control system that has collected the data related to collision warnings may communicate with a personal device of the VRU and the corresponding vehicle, and retransmit the data to a communication module, such as smart signals near the VRU.

In still another example, for classes that have not been trained in an AI model, new classes can be estimated through mutual information sharing between sensors. For example, in the case of the AI model trained only to distinguish pedestrian objects, but not trained on specific classes, such as bicycles or personal mobility devices, these personal mobility devices may be recognized merely as pedestrians. Therefore, a bicycle or personal mobility device that moves at a sufficient speed can exhibit distinct features, which can be extracted by the radar sensor, on the Doppler map, and, thus, it is possible to sense first object. In this case, a pedestrian (second object) present outside or inside the lane in the image can be converted into radar coordinate information, and the presence of a first object near that position can be verified by using the radar sensor.

Then, if the first object matched with the pedestrian (second object) has a speed higher than the average pedestrian walking speed (e.g., 4.8 kph), it may be identified as a personal mobility device or bicycle. In this case, the reliability can also be enhanced by additionally utilizing features such as a second object identified as a pedestrian moving along a lane or a first object sensed by the radar sensor on a bikeway.

The object detection apparatus 100 may be executed by a computer program stored in a medium including a sequence of instructions for detecting an object using a radar sensor and an image sensor. When executed by a computing device, the computer program causes the computing device to sense a first object by the radar sensor installed to sense a target road and sense a second object by the image sensor installed to sense the target road, to match the first object with the second object, to generate a lookup table for the target road based on the matched first and second objects, and to complement a sensing result from the radar sensor or a sensing result from the image sensor based on the generated lookup table.

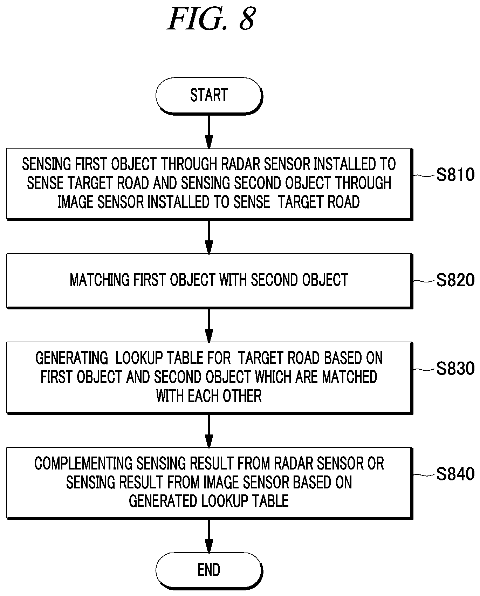

FIG. 8 is a flowchart showing a method for detecting an object using the radar sensor and the image sensor in the object detection apparatus according to an embodiment of the present disclosure. Referring to FIG. 8, the method for detecting an object using the radar sensor and the image sensor in the object detection apparatus 100 includes the processes time-sequentially performed according to the embodiment illustrated in FIG. 1 to FIG. 7. Therefore, the descriptions of the processes may also be applied to the method for detecting an object using the radar sensor and the image sensor in the object detection apparatus 100 according to the embodiment illustrated in FIG. 1 to FIG. 7 even though they are omitted hereinafter.

In a process S810, the object detection apparatus 100 may sense a first object through a radar sensor installed to sense a target road and sense a second object through an image sensor installed to sense the target road.

In a process S820, the object detection apparatus 100 may match the first object with the second object.

In a process S830, the object detection apparatus 100 may generate a lookup table for the target road based on the first object and the second object which are matched with each other.

In a process S840, the object detection apparatus 100 may complement a sensing result from the radar sensor or a sensing result from the image sensor based on the generated lookup table.

In the descriptions above, the processes S810 to S840 may be divided into additional processes or combined into fewer processes depending on an embodiment. In addition, some of the processes may be omitted and the sequence of the processes may be changed if necessary.

The method for a method for detecting an object using a radar sensor and an image sensor by an object detection apparatus described above with reference to FIG. 1 to FIG. 8 can be implemented in a computer program stored in a medium to be executed by a computer or a storage medium including instructions codes executable by a computer. Also, the method for a method for detecting an object using a radar sensor and an image sensor by an object detection apparatus described above with reference to FIG. 1 to FIG. 8 can be implemented in a computer program stored in a medium to be executed by a computer.

The embodiment of the present disclosure can be embodied in a storage medium including instruction codes executable by a computer such as a program module executed by the computer. A computer-readable medium can be any usable medium which can be accessed by the computer and includes all volatile/non-volatile and removable/non-removable media. Further, the computer-readable medium may include all computer storage media. The computer storage media include all volatile/non-volatile and removable/non-removable media embodied by a certain method or technology for storing information such as computer-readable instruction code, a data structure, a program module or other data.

The above description of the present disclosure is provided for the purpose of illustration, and it would be understood by a person with ordinary skill in the art to which the present invention belongs that various changes and modifications may be made without changing technical conception and essential features of the present disclosure. Thus, it is clear that the above-described examples are illustrative in all aspects and do not limit the present disclosure. For example, each component described to be of a single type can be implemented in a distributed manner, likewise, components described to be distributed can be implemented in a combined manner.

The scope of the present disclosure is defined by the following claims rather than by the detailed description of the embodiment, and it should be understood that all modifications and embodiments conceived from the meaning and scope of the claims and their equivalents are included in the scope of the present disclosure.

**Claims**

1. An object detection apparatus for detecting an object using a radar sensor and an image sensor, comprising:

   an object sensing unit configured to:

   sense a first object through the radar sensor installed to sense a target road; and
   sense a second object through the image sensor installed to sense the target road;

   an object matching unit configured to match the first object with the second object;
   a lookup table management unit configured to generate a lookup table for the target road based on the first object and the second object which are matched with each other; and
   a complementation unit configured to complement a sensing result from the radar sensor or a sensing result from the image sensor based on the generated lookup table.

2. The object detection apparatus of Claim 1, wherein the object matching unit matches the first object with the second object by comparing position information of the first object located within a radar sensor lane set in the target road with position information of the second object located within an image sensor lane set in the target road.

3. The object detection apparatus of Claim 2, wherein the object matching unit matches the first object with the second object based on whether the first object and the second object satisfy predetermined matching conditions.

4. The object detection apparatus of Claim 1, wherein the lookup table management unit generates the lookup table based on pixel coordinate information corresponding to a position of the second object among a plurality of pixels corresponding to image data generated by the image sensor and radar coordinate information corresponding to a position of the first object.

5. The object detection apparatus of Claim 4, wherein the lookup table management unit generates a horizontal lookup table based on radar coordinate information for a horizontal axis corresponding to the position of the first object and a vertical lookup table based on radar coordinate information for a vertical axis corresponding to the position of the first object.

6. The object detection apparatus of Claim 4,

   wherein when a plurality of image data corresponding to a plurality of frames is generated by the image sensor for a predetermined period, the lookup table management unit generates a plurality of lookup tables corresponding to the plurality of image data, respectively, and
   the lookup table management unit applies a smoothing filter to the plurality of lookup tables to generate a representative lookup table.

7. The object detection apparatus of Claim 6, wherein the lookup table management unit expands the representative lookup table through either linear regression or homography.

8. The object detection apparatus of Claim 7,

   wherein the lookup table management unit generates a linear regression model based on at least one of a plurality of row data in the representative lookup table through linear regression, and

the lookup table management unit removes noise from the row data based on the linear regression model and infers radar coordinate information from the row data for pixel coordinates where radar coordinate information is not stored.

9. The object detection apparatus of Claim 7,

   wherein the lookup table management unit uses the homography to derive a coefficient matrix for a mapping relationship between the radar coordinate information and the pixel coordinate information, and
   the lookup table management unit expands the representative lookup table based on the derived coefficient matrix.

10. An object detection method for detecting an object using a radar sensor and an image sensor by an object detection apparatus, comprising:

   sensing a first object through the radar sensor installed to sense a target road and sense a second object through the image sensor installed to sense the target road;
   matching the first object with the second object;
   generating a lookup table for the target road based on the first object and the second object which are matched with each other; and
   complementing a sensing result from the radar sensor or a sensing result from the image sensor based on the generated lookup table.

11. The object detection method of Claim 10,

   wherein in the matching of the first object with the second object,
   the first object is matched with the second object by comparing position information of the first object located within a radar sensor lane set in the target road with position information of the second object located within an image sensor lane set in the target road.

12. The object detection method of Claim 11,
   wherein the matching of the first object with the second object includes:
   matching the first object with the second object based on whether the first object and the second object satisfy predetermined matching conditions.

13. The object detection method of Claim 10,
   wherein the generating a lookup table for the target road includes:
   generating the lookup table based on pixel coordinate information corresponding to a position of the second object among a plurality of pixels corresponding to image data generated by the image sensor and radar coordinate information corresponding to a position of the first object.

14. The object detection method of Claim 13,
   wherein the generating a lookup table for the target road includes:

   generating a horizontal lookup table based on radar coordinate information for a horizontal axis corresponding to the position of the first object; and
   generating a vertical lookup table based on radar coordinate information for a vertical axis corresponding to the position of the first object.

15. The object detection method of Claim 13,
   wherein the generating a lookup table for the target road includes:

   generating a plurality of lookup tables corresponding to a plurality of image data, respectively, when the plurality of image data corresponding to a plurality of frames is generated by the image sensor for a predetermined period; and
   applying a smoothing filter to the plurality of lookup tables to generate a representative lookup table.

16. The object detection method of Claim 15, further comprising:
   expanding the representative lookup table through either linear regression or homography.

17. The object detection method of Claim 16,
   wherein the expanding the representative lookup table includes:

   generating a linear regression model based on at least one of a plurality of row data in the representative lookup table through linear regression; and
   removing noise from the row data based on the linear regression model and
   inferring radar coordinate information from the row data for pixel coordinates where radar coordinate information is not stored.

18. The object detection method of Claim 16,
   wherein the expanding the representative lookup table includes:

   using the homography to derive a coefficient matrix for a mapping relationship between the radar coordinate information and the pixel coordinate information; and
   expanding the representative lookup table based on the derived coefficient matrix.

19. A computer program stored in a computer-readable medium and including a sequence of instructions for detecting an object using a radar sensor and an image sensor, wherein when the computer program is executed, the instructions cause a computing device to:

sense a first object through the radar sensor installed to sense a target road and sense a second object through the image sensor installed to sense the target road;
match the first object with the second object;
generate a lookup table for the target road based on the first object and the second object which are matched with each other; and
complement a sensing result from the radar sensor or a sensing result from the image sensor based on the generated lookup table.

# FIG. 1

# FIG. 2A

# FIG. 2B

220

# FIG. 2C

230

# FIG. 3

FIG. 4

EP 4 624 992 A1

## FIG. 5

# FIG. 6

*FIG. 7*

# FIG. 8

```
                          ┌─────────────┐
                          │    START    │
                          └─────────────┘
                                 │
                                 ▼
┌──────────────────────────────────────────────────────────┐
│  SENSING FIRST OBJECT THROUGH RADAR SENSOR INSTALLED TO    │
│  SENSE TARGET ROAD AND SENSING SECOND OBJECT THROUGH       │ ~S810
│  IMAGE SENSOR INSTALLED TO SENSE  TARGET ROAD              │
└──────────────────────────────────────────────────────────┘
                                 │
                                 ▼
┌──────────────────────────────────────────────────────────┐
│       MATCHING FIRST OBJECT WITH SECOND OBJECT             │ ~S820
└──────────────────────────────────────────────────────────┘
                                 │
                                 ▼
┌──────────────────────────────────────────────────────────┐
│  GENERATING  LOOKUP TABLE FOR  TARGET ROAD BASED ON        │
│  FIRST OBJECT AND SECOND OBJECT WHICH ARE MATCHED          │ ~S830
│  WITH EACH OTHER                                           │
└──────────────────────────────────────────────────────────┘
                                 │
                                 ▼
┌──────────────────────────────────────────────────────────┐
│  COMPLEMENTING SENSING RESULT FROM RADAR SENSOR OR         │
│  SENSING RESULT FROM IMAGE SENSOR BASED ON                 │ ~S840
│  GENERATED LOOKUP TABLE                                    │
└──────────────────────────────────────────────────────────┘
                                 │
                                 ▼
                          ┌─────────────┐
                          │     END     │
                          └─────────────┘
```

## INTERNATIONAL SEARCH REPORT

| International application No. |
| --- |
| **PCT/KR2022/021714** |

**A. CLASSIFICATION OF SUBJECT MATTER**

**G01S 13/86**(2006.01)i; **G01S 13/91**(2006.01)i; **G06T 7/70**(2017.01)i

According to International Patent Classification (IPC) or to both national classification and IPC

**B. FIELDS SEARCHED**

Minimum documentation searched (classification system followed by classification symbols)

G01S 13/86(2006.01); B41J 2/52(2006.01); G01S 13/93(2006.01); G06T 3/00(2006.01); G06T 7/11(2017.01); H04N 1/46(2006.01); H04N 5/262(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 레이더(radar), 카메라(camera), 객체(object), 매칭(matching), 룩업 테이블(look-up table)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2029850 B1 (INDUSTRY ACADEMY COOPERATION FOUNDATION OF SEJONG UNIVERSITY) 08 October 2019 (2019-10-08) See paragraphs [0036]-[0068], claim 1 and figures 1-4. | 1-7,10-16,19 |
| A | | 8-9,17-18 |
| Y | KR 10-2020-0123513 A (IU PLUS, INC.) 30 October 2020 (2020-10-30) See paragraph [0033], claim 1 and figures 1-2. | 1-7,10-16,19 |
| Y | KR 10-2008-0034720 A (HYUNDAI MOTOR COMPANY) 22 April 2008 (2008-04-22) See paragraphs [0025]-[0050] and figure 18. | 5,14 |
| Y | JP 2003-116012 A (CANON INC.) 18 April 2003 (2003-04-18) See paragraphs [0038]-[0066] and figure 10. | 6-7,15-16 |

☑ Further documents are listed in the continuation of Box C. ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **21 September 2023** | **21 September 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/021714** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2015-0101806 A (DONG-EUI UNIVERSITY INDUSTRY-ACADEMIC COOPERATION FOUNDATION) 04 September 2015 (2015-09-04) See paragraphs [0046]-[0053] and figure 3. | 1-19 |

Form PCT/ISA/210 (second sheet) (July 2022)

## INTERNATIONAL SEARCH REPORT
### Information on patent family members

International application No.

**PCT/KR2022/021714**

| Patent document cited in search report | | | Publication date (day/month/year) | Patent family member(s) | | | Publication date (day/month/year) |
|---|---|---|---|---|---|---|---|
| KR | 10-2029850 | B1 | 08 October 2019 | None | | | |
| KR | 10-2020-0123513 | A | 30 October 2020 | KR | 10-2175947 | B1 | 11 November 2020 |
| KR | 10-2008-0034720 | A | 22 April 2008 | KR | 10-0831452 | B1 | 21 May 2008 |
| JP | 2003-116012 | A | 18 April 2003 | EP | 1301025 | B1 | 25 July 2012 |
| | | | | JP | 2003-179764 | A | 27 June 2003 |
| | | | | JP | 4109946 | B2 | 02 July 2008 |
| | | | | JP | 4261787 | B2 | 30 April 2009 |
| | | | | US | 2003-0081831 | A1 | 01 May 2003 |
| | | | | US | 2006-0245016 | A1 | 02 November 2006 |
| | | | | US | 7136523 | B2 | 14 November 2006 |
| | | | | US | 7706605 | B2 | 27 April 2010 |
| KR | 10-2015-0101806 | A | 04 September 2015 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100987177